**Europäisches Patentamt**

**European Patent Office**

**Office européen des brevets**

(19)

(11) Veröffentlichungsnummer : **0 591 829 A1**

(12) # EUROPÄISCHE PATENTANMELDUNG

(21) Anmeldenummer : **93115704.4**

(22) Anmeldetag : **29.09.93**

(51) Int. Cl.$^5$ : **C08L 81/02,** // (C08L81/02, 23:02)

(30) Priorität : **03.10.92 DE 4233310**

(43) Veröffentlichungstag der Anmeldung :
**13.04.94 Patentblatt 94/15**

(84) Benannte Vertragsstaaten :
**AT BE CH DE DK ES FR GB IT LI LU NL SE**

(71) Anmelder : **HOECHST
AKTIENGESELLSCHAFT
Brüningstrasse 64
D-65929 Frankfurt (DE)**

(72) Erfinder : **Kohlhepp, Klaus
Am Dattenbach 27
D-65817 Eppstein/Taunus (DE)**
Erfinder : **Fleischer, Dietrich, Dr.
Seitersweg 19
D-64287 Darmstadt (DE)**
Erfinder : **Christ, Peter
Sickingenstrasse 19
D-65187 Wiesbaden (DE)**

(54) **Thermoplastische Formmasse mit hoher Verschleissfestigkeit auf Basis von Polyphenylensulfid und ihre Verwendung.**

(57) Eine thermoplastische Formmasse aus (A) 20 bis 70 Gew.-% Polyphenylensulfid, (B) 5 bis 20 Gew.-% ultrahochmolekularem Polyethylen, (C) 10 bis 40 Gew.-% eines faserförmigen Verstärkungsmittels, (D) 10 bis 40 Gew.-% eines anorganischen Füllstoffes und (E) 0 bis 1 Gew.- % eines Gleitmittels und/oder anderer Additive wird zur Herstellung von Formkörpern, Fasern und Folien eingesetzt, die besonders gute Verschleißeigenschaften aufweisen.

EP 0 591 829 A1

Die Erfindung betrifft thermoplastische Formmassen aus Polyphenylensulfid, die ultrahochmolekulares Polyethylen enthalten und mit faserförmigen Verstärkungsmitteln sowie anorganischen Füllstoffen versehen sind, sowie deren Herstellung und Verwendung. Aus diesen Formmassen hergestellte Formkörper weisen besonders gute Verschleißeigenschaften auf.

Polyphenylensulfide können als Rohstoffe für die Herstellung von Formkörpern, Fasern und Folien verwendet werden. Sie besitzen aufgrund ihrer teilkristallinen Struktur hervorragende Eigenschaften, z.B. hohe Härte und Steifheit, inhärente Flammwidrigkeit, gute Verschleißfestigkeit, günstiges Zeitstandverhalten und hohe Maßgenauigkeit. Eine zusätzliche Verbesserung der mechanischen Eigenschaften und insbesondere der Wärmeformbeständigkeit läßt sich durch Einarbeitung von Verstärkungsstoffen, z.B. Glasfasern, und auch mineralischen Füllstoffen, z.B. Talk, Kreide, Glimmer, erzielen. Polyphenylensulfid-Formmassen, denen anorganische Verstärkungs- und Füllstoffe zugesetzt werden, haben für viele Anwendungszwecke jedoch mitunter eine nicht ausreichende Abriebbeständigkeit.

Es ist bekannt, daß durch Zusätze von ultrahochmolekularem Polyethylen (UHMW-PE) zu Kunststoffen, Produkte mit besseren Gleiteigenschaften und damit höherer Verschleißfestigkeit erhalten werden (EP-A 0 329 176). Polyphenylensulfid wurde z.B. für Anwendungen als Gleitmaterial mit Kaliumtitanatfasern und einem hochmolekularen festen Gleitmittel, wie Polytetrafluorethylen (PTFE), Polyethylen mit hoher Dichte (HD-PE) und UHMW-PE, versetzt (JP-A 61-040 357). Polyphenylensulfid wurde auch zusammen mit Glasfasern und 2 Gew.-% UHMW-PE (Molmasse etwa 1 000 000) extrudiert und verarbeitet (JP-A 61-285 256).

Weiterhin werden Polyphenylensulfid-Harze mit guten Gleiteigenschaften und guten mechanischen Eigenschaften in der JP-A 63-205 356 beschrieben. Sie enthalten einen oder mehrere Verstärkungsstoffe aus thermisch beständigen Fasern oder anorganischen Whiskern sowie Polyethylen-Pulver mit ultrahohem Molekulargewicht. Als anorganische Whisker werden Kaliumtitanat, Borcarbid, Siliciumcarbid, Siliciumnitrid und Berylliumoxid genannt. Diese wurden in Mengen von 5 bis 40 Gew.-T. zu 100 Gew.-T. Polyphenylensulfid eingesetzt. Formkörper aus solchen Dreikomponenten-Mischungen wurden hergestellt, die verbesserte Zug- und Biegefestigkeiten aufweisen sollen.

Es bestand nun die Aufgabe, die Abriebfestigkeit von Polyphenylensulfid-Formteilen, die anorganische Verstärkungs- und Füllstoffe enthalten, zu verbessern.

Die Erfindung betrifft daher eine thermoplastische Formmasse aus

(A) 20 bis 70, vorzugsweise 25 bis 50 Gew.-% Polyphenylensulfid,

(B) 5 bis 20, vorzugsweise 7 bis 17 Gew.-% ultrahochmolekularem Polyethylen,

(C) 10 bis 40, vorzugsweise 20 bis 30 Gew.-% eines faserförmigen Verstärkungsmittels,

(D) 10 bis 40, vorzugsweise 20 bis 30 Gew.-% eines anorganischen Füllstoffes und

(E) 0 bis 1 Gew.-% eines Gleitmittels und/oder anderer Additive, wobei die Summe der Komponenten (A) bis (E) 100 Gew.% beträgt.

Aus dieser Formmasse erhält man Formkörper mit besonders gutem Verschleißverhalten, d.h. mit einer hohen Abriebbeständigkeit, auf Basis von Polyphenylensulfid, wobei die einzelnen Bestandteile auf üblichen Mischgeräten zu Formmassen verarbeitet werden und aus diesen dann auf den üblichen Verarbeitungsmaschinen die gewünschten Formkörper erzeugt werden.

Während die Abriebfestigkeit der erfindungsgemäßen Formmassen überraschend deutlich verbessert wird, bleiben andere mechanische Eigenschaften im wesentlichen gleich.

Als Komponente (A) (= Polyphenylensulfid) wird ein handelsübliches Produkt, hergestellt in einer Polymerisationsreaktion aus p-Dichlorbenzol und Natriumsulfid bei erhöhter Temperatur, eingesetzt. Sein Molekulargewicht beträgt etwa 18000 (bestimmt in Chlornaphthalin bei 235°C). Die Viskosität beträgt etwa 300 P bei 1200 s$^{-1}$ und 315°C.

Die Komponente (B) (= UHMW-PE), weist mittlere Molmassen von mindestens 1 000 000 auf. Als faserförmige Verstärkungsstoffe dienen Glasfasern oder andere temperaturbeständige, anorganische oder organische Faserstoffe. Bevorzugt werden Glasfasern eingesetzt.

Anorganische Füllstoffe sind nichtfaserförmiger Struktur wie Talk, Kaolin, Quarz, Kreide und Glimmer. Als besonders vorteilhaft hat sich Kreide in Kombination mit Glasfasern und den Komponenten (A) und (B) erwiesen.

Überraschend lassen sich die Zusammensetzungen gemäß der Erfindung mit den relativ hohen Anteilen an der Komponente (B) bei den erforderlichen Verarbeitungstemperaturen von etwa 300°C bis etwa 350°C ohne Zersetzung zu Formmassen verarbeiten.

Die Herstellung der Formmassen kann auf den üblichen Mischgeräten durchgeführt werden. Als solche eignen sich Kneter, Ein- und Zweiwellenextruder. Für die weitere Verarbeitung kann die erhaltene Mischung nach dem Erstarren der Schmelze granuliert werden.

Die Herstellung von Formkörpern, Fasern und Folien erfolgt auf den hierfür üblichen Verarbeitungsmaschinen. Formkörper werden vorzugsweise durch alle Arten von Spritzguß erzeugt.

2

Die aus den Zusammensetzungen gemäß der Erfindung hergestellten Formkörper weisen eine hohe Verschleißfestigkeit auf, d.h. sie besitzen ein hervorragendes Gleitverhalten. Gleichzeitig behalten sie die vorteilhaften üblichen mechanischen Eigenschaften, die verstärkte und gefüllte Formkörper aus Polyphenylensulfid besitzen.

Besonders vorteilhaft lassen sich Formkörper aus den erfindungsgemäßen Massen als Teile in technischen Apparaturen verwenden, die einer ständigen Bewegung unterworfen sind und dabei auf anderen Apparateteilen gleiten müssen. Die hierfür benötigten sehr guten Gleiteigenschaften der Oberfläche und eine hohe Verschleißfestigkeit der Teile ist durch die Erfindung erfüllt.

Die Formmassen können weitere übliche Zusatzstoffe (E) enthalten, die für Kunststoffe üblich sind, wie Gleitmittel, Fließhilfsmittel, Entformungsmittel, Stabilisatoren, UV-Absorber, anorganische Pigmente, organische Farbstoffe u.a. Die Mengen dieser Zusatzstoffe überschreiten im allgemeinen nicht 1 Gew.-% der gesamten Formmasse.

Beispiele

Die Formmassen auf Basis von Polyphenylensulfid wurden durch Mischen und Homogenisieren der Basiskomponenten (siehe Tabelle 1) mit einem 25 mm Doppelwellenextruder (Typ ZSK25, Hersteller: Werner & Pfleiderer, Stuttgart, Bundesrepublik Deutschland) bei einer Schmelzetemperatur von 310°C hergestellt und der gekühlte Schmelzestrang zu Granulat zerkleinert. Die erhaltenen Granulate wurden getrocknet und unter den für Polyphenylensulfid-Massen typischen Standardbedingungen zu Prüfkörpern verschiedenster Abmessungen auf Spritzgießmaschinen verarbeitet.

Tabelle 1:

|  |  | Beispiel 1 | Beispiel 2 | Beispiel 3 | Vergl.-Beispiel 1 |
|---|---|---|---|---|---|
| PPS [1] |  | 33,7 | 33,7 | 33,7 | 33,7 |
| Glasfaser [2] |  | 28,0 | 23,0 | 25,5 | 33,0 |
| Kreide [3] |  | 28,0 | 33,0 | 25,5 | 33,0 |
| UHMW-PE [4] |  | 10 | 10 | 15 | -- |
| Gleitmittel [5] |  | 0,3 | 0,3 | 0,3 | 0,3 |

1)     Polyphenylensulfid-Pulver,

Viskosität ca. 300 P bei 1200 $s^{-1}$ und 315°C

2)     Schnittglasfaser (4,5 mm) von Fa. Owens Corning Fiberglass

3)     ®"Millicarb" der Fa. Omya, Köln, Bundesrepublik Deutschland

4)     Ultrahochmolekulares Polyethylen (®Hostalen GUR 812) der Fa.

HOECHST AG, Frankfurt/Main, Bundesrepublik Deutschland

5)     Pentaerythrit-tetrastearat

Für Verschleißprüfungen wurde folgende Methode entwickelt ("Klötzchenmethode Hoechst"):

Ein Probekörper mit 12,22 mm Durchmesser (ein entsprechender Abschnitt einer dicken Spritzplatte) wird mit einer konstanten Last von 3,04 N auf eine sich drehende (v = 136 m/min) Metallwalze ($\phi$ = 65 mm) gedrückt. Bestimmt werden die Einschliffbreiten (unter dem Mikroskop) nach 6/10/24/60 Stunden.

Die Verschleißvolumina werden aus der Breite mit Hilfe eines EDV-Programms errechnet und als Prüfergebnis angegeben. Es werden jeweils 6 Prüfkörper geprüft. Errechnet wird aus den Einzelwerten der Mittelwert.

Die Ergebnisse der Prüfungen an den Beispielen 1 bis 3 und dem Vergleichsbeispiel 1 sind in den Tabellen 2 und 3 angegeben und in der Abbildung 1 graphisch aufgetragen.

Tabelle 2:

| Verschleißvolumen (mm³) nach der Klötzchen-Methode | | | |
|---|---|---|---|
| Zeit (h) | Beispiel 1 | Beispiel 2 | Beispiel 3 | Vergl.- Beispiel 1 |
| 6 | 0,0732 | 0,0406 | 0,0526 | 0,2507 |
| 10 | 0,1314 | 0,0916 | 0,1123 | 0,3629 |
| 24 | 0,3807 | 0,2937 | 0,3126 | 0,6759 |
| 60 | 1,0640 | 0,9977 | 0,9202 | 1,7120 |

Tabelle 3:

Ergebnisse der mechanischen Prüfungen

| Eigenschaft | Methode | Einheit | Bsp. 1 | Bsp. 2 | Bsp. 3 | Vergl.- Beispiel 1 |
|---|---|---|---|---|---|---|
| Dichte | DIN 53 479, Verf. A | g/cm³ | 1,67 | 1,66 | 1,56 | 2,03 |
| Reißfestigkeit | DIN 53 455, ISO 570 | N/mm² | 102 | 81 | 79 | 111 |
| Reißdehnung | DIN 53 455, ISO 570 | % | 1,3 | 1,1 | 1,1 | 1,0 |
| Charpy Schlagzähigkeit | DIN 53 453 | mJ/mm² | 18 | 16 | 16 | 19 |
| Charpy Kerbschl.-Zähigkeit | DIN 53 453 | mJ/mm² | 7,5 | 6,0 | 6,3 | 7 |
| Izod "rev.notch" Schl.-Zähigkeit | ISO 180/1C | mJ/mm² | 13,2 | 13,2 | 11,6 | - |
| Izod "notched" Schl.-Zähigkeit | ISO 180/1A | mJ/mm² |  | 5,5 | 5,7 | - |
| Wärmestandfestigkeit HDT/C * | DIN 53 461, ISO 75 | °C | 216 | 213 | 193 | 241 |

* HDT/A: in allen Fällen > 260°C

Anzahl der Prüfkörper: in den meisten Fällen n = 10

EP 0 591 829 A1

**Patentansprüche**

1. Thermoplastische Formmasse aus
   (A) 20 bis 70 Gew.-% Polyphenylensulfid,
   (B) 5 bis 20 Gew.-% ultrahochmolekularem Polyethylen,
   (C) 10 bis 40 Gew.-% eines faserförmigen Verstärkungsmittels,
   (D) 10 bis 40 Gew.-% eines anorganischen Füllstoffes und
   (E) 0 bis 1 Gew.-% eines Gleitmittels und/oder anderer Additive.

2. Formmasse nach Anspruch 1 aus
   (A) 25 bis 50 Gew.-% Polyphenylensulfid,
   (B) 7 bis 17 Gew.- % ultrahochmolekularem Polyethylen,
   (C) 20 bis 30 Gew.-% eines faserförmigen Verstärkungsmittels,
   (D) 20 bis 30 Gew.-% eines anorganischen Füllstoffes und
   (E) 0 bis 1 Gew.-% eines Gleitmittels und/oder anderer Additive.

3. Formmasse nach Anspruch 1 oder 2, dadurch gekennzeichnet, daß das ultrahochmolekulare Polyethylen eine mittlere Molmasse von mindestens 1 000 000 besitzt.

4. Formmasse nach einem oder mehreren der Ansprüche 1 bis 3, dadurch gekennzeichnet, daß als faserförmiges Verstärkungsmittel Glasfasern verwendet werden.

5. Formmasse nach einem oder mehreren der Ansprüche 1 bis 4, dadurch gekennzeichnet, daß als anorganischer Füllstoff Kreide verwendet wird.

6. Verwendung der thermoplastischen Formmasse nach einem oder mehreren der Ansprüche 1 bis 5 zur Herstellung von Formkörpern, Fasern und Folien.

7. Formkörper nach Anspruch 6 in Gestalt verschleißfester technischer Apparateteile.

8. Formkörper nach Anspruch 7 in Gestalt mechanisch beanspruchter Gleitelemente in technischen Apparaten.

Europäisches
Patentamt

# EUROPÄISCHER RECHERCHENBERICHT

Nummer der Anmeldung

EP 93 11 5704

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| Y | EP-A-0 330 488 (HOECHST)<br>* Ansprüche 1-15; Tabellen 1-3 *<br>--- | 1 | C08L81/02<br>//C08L81/02,<br>23:02 |
| Y | EP-A-0 001 281 (PHILLIPS PETROLEUM)<br>* Ansprüche 1-9 *<br>--- | 1 | |
| Y | PATENT ABSTRACTS OF JAPAN<br>vol. 16, no. 265 (C-951)16. Juni 1992<br>& JP-A-04 063 866 (BANDO CHEM IND LTD) 28.<br>September 1992<br>* Zusammenfassung *<br>--- | 1 | |
| Y | PATENT ABSTRACTS OF JAPAN<br>vol. 2, no. 255 (C-32)26. Dezember 1978<br>& JP-A-53 123 458 (FUJITSU LTD) 27.<br>Oktober 1978<br>* Zusammenfassung *<br>--- | 1 | |
| Y | H.F.MARK ET ALL. 'Encyclopedia of Polymer Science and Engineering'<br>1986 , J.WILEY & SONS , NEW YORK, U.S.<br>Vol 6. Ultrahigh molecular weight polyethylene<br>* Seite 490, Absatz 2 *<br>----- | 1 | RECHERCHIERTE SACHGEBIETE (Int.Cl.5)<br><br>C08L |

Der vorliegende Recherchenbericht wurde für alle Patentansprüche erstellt

| Recherchenort | Abschlußdatum der Recherche | Prüfer |
|---|---|---|
| DEN HAAG | 25. Januar 1994 | Stienon, P |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes
    Dokument

EPO FORM 1503 03.82 (P04C03)